(19) 【Europäisches Patentamt / European Patent Office / Office européen des brevets】

(11) **EP 4 467 625 A1**

(12) # EUROPEAN PATENT APPLICATION

(43) Date of publication:
**27.11.2024 Bulletin 2024/48**

(21) Application number: **23305818.9**

(22) Date of filing: **23.05.2023**

(51) International Patent Classification (IPC):
***C09J 189/00*** (2006.01)  ***D04H 1/4209*** (2012.01)
***D04H 1/587*** (2012.01)

(52) Cooperative Patent Classification (CPC):
(C-Sets available)
**D04H 1/4209; C03C 25/26; C09J 103/02;
C09J 189/00; C09J 199/00; D04H 1/587;
D04H 1/64;** C08G 73/0286          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **EVERTREE
60280 Venette (FR)**

(72) Inventor: **The designation of the inventor has not
yet been filed**

(74) Representative: **Santarelli
Tour Trinity
1 bis Esplanade de la Défense
92035 Paris La Défense Cedex (FR)**

(54) **ADHESIVE COMPOSITION FOR BONDING STONE FIBERS**

(57) The invention relates to an aqueous adhesive composition comprising ground pea seeds and an amine-based azetidinium-functional cross-linker for bonding stone fibers.

EP 4 467 625 A1

(52) Cooperative Patent Classification (CPC): (Cont.)

C-Sets
**C09J 189/00, C08L 79/02**

**Description**

**Field of the Invention**

The present invention relates to the use of an aqueous adhesive composition (binder) comprising ground pea seeds and an amine-based azetidinium-functional cross-linker for bonding (coating) stone (or rock) fibers. The present invention also relates to manufacturing processes of a stone fiber material its using this adhesive composition.

**Background of the Invention**

Adhesive compositions are extensively used in the industry, in particular, the stone (or rock) fiber industry to make stone fiber insulation products, such as stone wool.

Methods for manufacturing stone fibers and stone fiber materials (such as stone wool) are well known in the art. In particular, stone fiber insulation production comprises batching the raw materials (silica and other ingredients), melting (at about 1400°C), fiberizing (extrusion and attenuation), coating (with lubricants, adhesive and/or coupling agents), drying, and packaging.

It is known in the art formaldehyde-free binder compositions for mineral fibers comprising a plant protein and a phenol containing compound or a silicon compound (see for example International applications WO2022/175310 and WO2022/174890).

It is also know composites produced using a mineral substrate such as a stone wool and a binder comprising a mixture of a non-starch polysaccharide and a cross-linker such as a polyamide-epichlorohydrin. No protein-based adhesive is disclosed in this document.

International application WO2007/014236 discloses an adhesive comprising a Maillard reaction product (wherein le Maillard reactant includes an amine and a carbohydrate) and a silicon-containing compound, and the use thereof for manufacturing fiberglass.

International application WO2010/088321 describes an aqueous adhesive composition for manufacturing a non-woven glass mat (but not stone fiber material), said adhesive comprising soy proteins and a cross-linking agent such as polyamidoamide epichlorohydrin. The soy proteins implemented in this document are preferably modified soy polymers.

Since the adhesives are usually sprayed on stone fibers during the manufacturing process of stone fiber material, it is required they have a low viscosity. However, manufacturing processes that use an aqueous solution with a plant protein powder or flour may lead to viscosity issues of the adhesive.

Diluting the adhesive to a low viscosity with more water is a limited option because adding too much water can take a longer curing time of the stone fiber material to remove excess water.

It is known different ways to reduce the viscosity of protein-based aqueous adhesives. For example, International application WO2008/024444 discloses an aqueous adhesive composition for bonding glass fibers or glass wool, comprising soy proteins and a low molecular weight polyamidoamine epichlorohydrin (PAE). However, the viscosity of such an adhesive composition is still high (about 20000 cPs). International application WO2012/112734 discloses an adhesive for bonding glass fibers, comprising an aqueous mixture of protein (in particular soy protein), PAE, and a non-urea diluent that is a low volatility water-soluble compound that provides low viscosity in water (such as glycerol), wherein the pH of such an adhesive composition is less than 5.

Nonetheless, the soy protein-based adhesive compositions usually have a high viscosity, which may result in processability issues, for example by preventing its use for applications such as injection or efficiently brought *via* other application equipment like rollers or brushes. Indeed, the adhesive must have a sufficiently low viscosity to be injected through nozzles or atomizers or applied *via* rollers. The protein-based adhesive composition should also maintain a high solid content to limit the excess of water added to the stone fibers to be glued. Indeed, excess of water may have negative effects on the curing step and on the properties of the resulting product.

Therefore, there is a need for improving processability of eco-friendly protein-based adhesive compositions, in particular by decreasing its viscosity, without compromising the final properties of the stone fiber material made therefrom. Furthermore, there is a need for improving processability of these adhesive compositions without decreasing the solid content.

The inventors have surprisingly found that using ground pea seeds in an adhesive composition improves the processability of the resulting adhesive composition, while allowing maintaining a high solid content in the adhesive composition.

Furthermore, the inventors have found that an adhesive composition comprising a combination of ground pea seeds with an amine-based azetidinium-functional cross-linker makes it possible to obtain stone fiber material (*e.g.,* stone wool) having excellent adhesive properties.

**Invention summary**

The present invention relates to the use of an adhesive composition comprising

- ground pea seeds comprising between 5 wt% and 40 wt% of crude proteins on the total weight of the ground pea seeds,
- an amine-based azetidinium-functional cross-linker, and
- water,

for binding (coating) stone fibers.

The adhesive of the invention is an aqueous mixture (or dispersion) of ground pea seeds comprising between 5 wt% and 40 wt% of crude proteins on the total weight of the ground pea seeds, and an amine-based azetidinium-functional cross-linker.

By "ground pea seeds", it is meant whole, dehulled or split pea seeds, which can be dehulled or partially dehulled, and have been ground or micronized into powder. Said seeds have not been submitted to any further transformation steps such as an extraction, a fractionation and/or a grafting step(s). In particular, the pea seed is not a solvent (*e.g.,* hexane) extracted pea seed. Preferably, the seeds have not been submitted to heat treatment at a temperature of at least 135°C, more preferably, at least 110°C, even more preferably, at least 80°C.

As an example of an extraction step, no fat, no starch, no protein extraction is performed. Therefore, ground pea seeds are not pea starch isolate, pea protein isolate (containing more than 80 wt% protein on the total weight of the isolate), pea starch concentrate nor pea protein concentrate (containing between 50 wt% and 80 wt% protein on the total weight of the concentrate).

Using these ground pea seeds has the advantage of simplifying the preparation of an adhesive composition, since no extraction or fractionation of the pea seed is necessary such as to obtain, for example, starch or protein concentrates or isolates, which have previously been described for preparing bio-based adhesive compositions. Furthermore, an adhesive composition used in the invention can be provided without having to modify the ground pea seeds, for example by an additional grafting step. Therefore, the production costs to prepare an adhesive composition used in the invention are reduced.

In addition, the ground pea seeds have the further advantage of having a lighter color (light yellow) than meals obtained from certain oleaginous plants (brown) such as sunflower seed meals or rapeseed meals, which will not affect the color of the final product.

Preferably, the ground pea seeds implemented in the adhesive composition used in the present invention belong to the genus *Pisum* and/or *Lathyrus.* More preferably, the seeds belong to the genus *Pisum.*

Preferably, the seeds belong to the species *Pisum sativum* and/or *Lathyrus aphaca,* more preferably, *Pisum sativum* (such as *Pisum sativum* L. known as yellow pea).

Advantageously, the ground pea seeds are micronized and optionally sieved pea seeds.

By "micronized", it is meant that the seeds have been ground to a particle size (Dv50) of at most 1000 $\mu$m.

Micronization can be carried out using a pin mill, an attrition mill, an impact mill or a hammer mill.

Advantageously, micronization is followed by a sieving step to obtain the desired particle size of the ground pea seeds.

Preferably, the ground pea seeds have a granulometry Dv50 comprised between 1 $\mu$m and 1000 $\mu$m, more preferably, between 1 $\mu$m and 500 $\mu$m, even more preferably, between 1 $\mu$m and 200 $\mu$m, most preferably, between 20 $\mu$m and 90 $\mu$m, for example about 25 $\mu$m.

It will be noted that in the context of the present application, and unless otherwise stipulated, the ranges of values indicated are understood to be inclusive.

By "about" a value, it is meant said value plus or minus 10%.

Preferably, the ground pea seeds have a granulometry Dv90 comprised between 10 $\mu$m and 1500 $\mu$m, more preferably, between 25 $\mu$m and 500 $\mu$m, even more preferably, between 50 $\mu$m and 150 $\mu$m, for example about 77 $\mu$m.

In a preferred embodiment, the ground pea seeds have a granulometry Dv50 comprised between 1 $\mu$m and 200 $\mu$m, preferably, between 20 $\mu$m and 90 $\mu$m, and a granulometry Dv90 comprised between 25 $\mu$m and 500 $\mu$m, preferably, between 50 $\mu$m and 150 $\mu$m.

The granulometry Dv50 and Dv90 are well-known by the skilled person respectively as the maximum size of 50%, or 90%, of the smallest particles in volume, and can be measured with a granulometer, for example according to the method described in Example 1 "Particle size determination".

Advantageously, the ground pea seeds comprise between 10 wt% and 30 wt% of crude protein, preferably, between 20 wt% and 30 wt%, such as between 15 wt% and 25 wt%, on the total weight of the ground pea seeds.

The crude protein content of the ground pea seeds can be measured following the Kjeldahl procedure (NF EN ISO 5983-2: 2009) with a nitrogen-to-protein conversion factor of 6.25.

Advantageously, the ground pea seeds comprise between 0.1 wt% and 20 wt% of oil, preferably, between 0.5 wt% and 12 wt%, more preferably, between 0.7 wt% and 5 wt% even more preferably, between 1.0 wt% and 2.0 wt%, on the total weight of the ground pea seeds.

The oil content of the ground pea seeds can be measured following the procedure as set forth in Example 1, *i.e.,* by extracting oil with a Soxhlet extractor using *n*-hexane as solvent, then, separating the hexane from oil by using a rotary evaporator at 68°C. Advantageously, the ground pea seeds comprise between 30 wt% and 70 wt% of starch, preferably between 40 wt% and 60 wt% more preferably between 45 wt% and 55 wt%, on the total weight of the ground pea seeds.

The starch content of the ground pea seeds can be measured following the procedure as set forth in Example 1, *i.e.,* after amylolysis and using HPAEC (High Performance Anion Exchange Chromatography with Pulsed Amperometric detection) Analyses.

Advantageously, the ground pea seeds have a water (moisture) content comprised between 1 wt% and 20 wt%, preferably between 1 wt% and 15 wt%, more preferably, between 3 wt% and 10 wt%, on the total weight of the ground pea seeds.

By "amine-based azetidinium-functional cross-linker", it is meant a cross-linker comprising amine and azetidinium groups.

By "cross-linker", it is meant a compound or mixture of compounds comprising reactive groups.

Advantageously, the amine-based azetidinium-functional cross-linker implemented in the adhesive composition used in the invention is a polyamidoamine-epichlorohydrin (PAE), a polyalkylenepolyamine-epichlorohydrin (PAPAE), an amine polymer-epichlorohydrin (APE), or a combination thereof.

More preferably, the amine-based azetidinium-functional cross-linker is a polyamidoamine-epichlorohydrin (PAE).

Advantageously, the adhesive composition used in the invention does not comprise a formaldehyde-based prepolymer.

By "formaldehyde-based prepolymer", it is meant a prepolymer or mixture of prepolymers obtained from at least one monomer being formaldehyde.

Preferably, the adhesive composition used in the invention does not comprise a urea-formaldehyde resin, a melamine-formaldehyde resin, a melamine urea-formaldehyde resin, a phenol-formaldehyde resin, a phenol-resorcinol-formaldehyde, or a combination thereof. More preferably, this adhesive composition does not comprise a urea-formaldehyde resin, a phenol-formaldehyde resin, or a combination thereof.

Advantageously, the weight ratio of the ground pea seeds / amine-based azetidinium-functional cross-linker (dry weight / dry weight) is comprised between 0.5 and 30, preferably between 1 and 20, more preferably, between 1 and 10, even more preferably, between 3 and 6.

Advantageously, the adhesive composition used in the invention comprises between 5 wt% and 60 wt% of the ground pea seeds, based on the total weight of the adhesive composition, preferably, between 15 wt% and 50 wt%, more preferably, between 20 wt% and 40 wt%, based on the total weight of the adhesive composition.

Advantageously, the adhesive composition used in the invention comprises between 2 wt% and 12 wt% of the amine-based azetidinium-functional cross-linker, based on the total weight of the adhesive composition, preferably, between 5 wt% and 9 wt%, based on the total weight of the adhesive composition.

Advantageously, the adhesive composition used in the invention has a solid content of at least 20 wt%, preferably, at least 25 wt%, more preferably, at least 30 wt%, even more preferably, at least 35 wt%, based on the total weight of the adhesive composition.

Advantageously, the adhesive composition used in the invention has a solid content comprised between 20 wt% and 60 wt%, preferably, comprised between 25 wt% and 55 wt%, more preferably, comprised between 30 wt% and 50 wt%, even more preferably, comprised between 35 wt% and 50 wt%, based on the total weight of the adhesive composition.

By "solid content" of the adhesive composition, it is meant the percentage of dry solids contained in said composition. For example, if a composition is prepared by mixing ground pea seeds and water, the residual water already contained in the ground pea seeds (*i.e.,* the water content of the ground pea seeds) is taken into consideration for calculating the solid content of the composition.

In a particular embodiment, the adhesive composition used in the invention further comprises a polyol.

Advantageously, this polyol is selected from the group consisting of glycerol (or crude vegetable glycerin), propylene glycol, ethylene glycol, alkyl and aryl derivatives of glycerol, alkyl and aryl derivatives of propylene glycol, alkyl and aryl derivatives of ethylene glycol, glucose, fructose, sorbitol, isosorbide, maltitol, mannitol, and erythritol, and/or from the group consisting of oligomers and polymers of any of the earlier listed monomers such as polyglycerols, polyethylene glycols (PEG), polypropylene glycols (PPG), glucose syrups, maltodextrins, dextrins, and modified starches. Other non-volatile hydroxylated compounds may also be used.

Preferably, the polyol is a trifunctional alcohol (*i.e.,* a compound containing three hydroxyl groups). Preferably, any polyol present in the adhesive composition used in the invention is not of petroleum origin.

More preferably, the polyol present in the adhesive composition used in the invention is glycerol or crude vegetable glycerin. Advantageously, this crude vegetable glycerin has a glycerol content of about 80%.

One benefit of using glycerol and various low-viscosity polyols is that they allow less water to be used in the adhesive composition. It allows to further increase the solid content of an adhesive composition. Reducing the amount of water, while retaining a low-viscosity adhesive composition, desirably reduces the risk that the composite formed therefrom is damaged by steam generated during formation of the composite at high temperature.

In this particular embodiment, the weight ratio of polyol / amine-based azetidinium-functional cross-linker (dry weight / dry weight) is advantageously comprised between 0.4 and 10, preferably, between 0.8 and 8, more preferably, between 1.5 and 6, even more preferably, between 3 and 5.

In this particular embodiment, the weight ratio of polyol / ground pea seeds (dry weight / dry weight) is advantageously comprised between 0.1 and 5, preferably, between 0.3 and 3, more preferably, between 0.5 and 2, even more preferably, between 0.7 and 1.2.

In this particular embodiment, the adhesive composition advantageously comprises between 5 wt% and 60 wt% of the polyol, preferably, between 10 wt% and 40 wt%, more preferably, between 15 wt% and 30 wt%, based on the total weight of the adhesive composition.

Advantageously, the pH of the adhesive composition is comprised between 3 and 12, preferably, between 5 and 11, more preferably, between 5 and 9. In particular, the pH of the adhesive composition is adjusted depending on the optimum pH of the amine-based azetidinium-functional cross-linker. In a preferred embodiment, the pH of the adhesive composition is comprised between 6 and 9. For example, the pH of an adhesive composition comprising PAE is preferably about 8.

Advantageously, the adhesive composition has a viscosity at 20°C of less than 1500 mPa.s, preferably, of less than 1300 mPa.s, more preferably, of less than 1200 mPa.s, even more preferably, of less than 1000 mPa.s, in particular comprised between 500 mPa.s and 900 mPa.s. This viscosity of the adhesive composition is obtained at pH 6, preferably at pH 9.

According to a preferred embodiment, the adhesive composition has the above-described viscosity and a solid content comprised between 20 wt% and 60 wt%, preferably, comprised between 25 wt% and 55 wt%, more preferably, comprised between 30 wt% and 50 wt%, even more preferably, comprised between 35 wt% and 50 wt%, based on the total weight of the adhesive composition.

The skilled person knows how to measure viscosity. Preferably, the viscosity can be measured as described in Examples 1and 2 (Rheological analysis).

Furthermore, all the viscosity measurements are done less than 15 min after stopping mixing the components of the adhesive composition.

In a particular embodiment, the adhesive composition used in the invention does not comprise any additional additive. In other words, the adhesive composition according to the invention consists of:

- ground pea seeds comprising between 5 wt% and 40 wt% of crude proteins on the total weight of the ground pea seeds,
- an amine-based azetidinium-functional cross-linker, and
- water,

and has a viscosity at 20°C of less than 1500 mPa.s, preferably comprised between 500 mPa.s and 900 mPa.s.

Contrary to the term "comprising", it is understood that the terms "consisting of" exclude the presence of any other additional compound.

The adhesive composition used in the invention may further comprise at least one additive.

In particular, said at least one additive is selected from the group consisting of:

- fillers, preferably nanofillers, such as calcium carbonate, clay or nanoclay (e.g. montmorillonite, bentonite) such as those sold under the trade names CLOISITEO Na+, CLOISITE®30B, CLOISITE®20A, CLOISITE®10A, natural biopolymers such as chitosan or cellulose, or metal such as silver, copper or gold,
- non-wood fibers, for example glass, carbon or aramid fibers,
- thickeners or texturizing agents, such as corn flour, wheat starch, olive kernel flour,
- gelling agents,
- surfactants such as siloxanes, anionic surfactants containing anionic functional groups such as alkyl sulfates (*e.g.,* sodium dodecyl sulfate), alkyl-ether sulfates (*e.g.,* sodium laureth sulfate), carboxylate salts (*e.g.,* soaps), and phosphates (*e.g.,* Alkyl ether phosphates)
- antioxidants such as polyphenols,
- antifoaming agents,

- antimicrobial agents such as oxidants, nisin,
- antibacterial agents such as nitrogen derivatives,
- fungicides such as sulphur-containing products,
- preservatives such as citric acid, paraben,
- pigments such as stone pigments, *e.g.,* carbon black,
- agents improving moisture resistance or water-repellent agents such as wax,
- pH modulators such as a base (*e.g.,* NaOH) or an acid (*e.g.,* HCl), preferably, an alkali hydroxide (*e.g.,* sodium hydroxide or calcium hydroxide) or an alkali metal salt of a carboxylate organic compound (*e.g.,* an alkali metal salt of citrate, such as di-sodium citrate), more preferably, an alkali hydroxide such as sodium hydroxide,
- anti-adhesive (*e.g.,* processing aids type stearate) or composite release agents,
- fire-resistant or fire-retardant agents such as ammonium polyphosphates, and
- an amine compound, preferably selected from the group consisting of urea, methylurea, polyurea, polyvinylamine, melamine, polyethylenimine (PEI), diethanoldiamine, ethanoldiamine, ethanolamine, diethanolamine, hexamine.

Preferably, this at least one additive is a pH modulator as described above, in particular, an alkali hydroxide such as sodium hydroxide.

In certain embodiments, the adhesive composition does not comprise any metal oxide. In particular, the adhesive composition does not comprise a metal oxide chosen from $MgO$, $CaO$, $ZnO$, $TiO_2$, $Fe_2O_3$, $Al_2O_3$, $SiO_2$, or a mixture thereof.

Preferably, upon curing, the adhesive composition forms a solid binder.

When the adhesive composition used in the present invention comprises at least one additive as previously defined, the skilled person will know at which step and how the latter is to be introduced depending on its chemical characteristics.

Advantageously, the adhesive composition used in the invention is sprayable.

In the present invention, the terms "stone" and "rock" are equivalent and may be used interchangeably.

Stone (or rock) fibers are usually made of natural stone, such as basalt, dolomite, diabase or cement. The diameter of the stone fibers implemented in the present invention is usually comprised between 1 $\mu$m and 34 $\mu$m, in particular between 3 $\mu$m and 10 $\mu$m. Methods for producing stone fibers are well known in the art. Stone fibers are usually used for producing stone (or rock) wool.

Advantageously, the stone fiber material is used for producing insulation product, such as a stone wool product, having for example thermal properties, fire resistance properties, sound-absorbing properties or moisture repelling properties. The insulation product can be a thermal, electrical or sound insulation product.

Methods for producing stone wool insulation products are well known in the art. By way of example, the first stage consists in converting the raw materials (stone or rock) into a molten product at a temperature between 1300°C and 1600°C. The molten stone is then transferred to a spinning machine. This step is called fibrization. An adhesive, optionally additives, and cooling water are added to the flow of fibers and the stone wool is shaped to the desired thickness. The wool is then transferred to an oven to be cured using hot air supplied by two natural gas-fired burners.

In addition, the invention relates to a stone fiber material comprising the adhesive composition according to the invention and stone fibers.

Preferably, the stone fiber material according to the invention is a mat or fabric. The mat can be a woven or an non-woven stone mat.

The stone fiber material according to the invention can be a stone fiber product, such as a stone fiber insulation product or a stone wool product. The insulation product can be a thermal, electrical or sound insulation product. In particular, the glass fiber material according to the invention is a stone wool product.

Preferably the stone fiber material does not comprise lignocellulosic fibers.

The invention further relates to a process for manufacturing the stone fiber material according to the invention, comprising a step of contacting (gluing) the adhesive composition according to the invention with stone fibers to provide a stone fiber material glued with the adhesive composition.

The present invention thus relates to a process for the manufacture of a stone fiber material, preferably stone fiber, stone wool or stone mat, the process comprising the steps of:

- obtaining stone fibers,
- contacting (gluing) the stone fibers with the adhesive composition as previously defined to provide stone fibers glued with the adhesive composition, and
- pressing and/or curing the stone fibers glued with the adhesive composition, thereby forming the stone fiber material.

By "contacting" the adhesive composition with stone fibers, it is meant preferably applying by brush or roller, mixing or spraying, more preferably, applying by spraying. Indeed, the viscosity of the adhesive composition is advantageously sufficiently low to allow the spraying of the composition.

In a particular embodiment, the process for manufacturing the material comprises a pressing step of the stone fiber material glued with the adhesive composition as previously defined. Preferably, the pressing time is comprised between 4 s/mm and 50 s/mm, more preferably, between 6 s/mm and 30 s/mm, even more preferably, between 8 s/mm and 15 s/mm, the pressing time being expressed in seconds per thickness of the stone fiber material in millimeters.

In a particular embodiment, the process for manufacturing a stone fiber material comprises a step of curing the adhesive composition. The curing can be carried out in an oven or using a hot press. Preferably, the curing is implemented by heating at a curing temperature comprised between 60°C and 300°C, more preferably, between 80°C and 250°C, even more preferably, between 160°C and 230°C.

Preferably, the process for manufacturing the stone fiber material comprises both the pressing and curing steps described before. More preferably, the curing and pressing steps are performed simultaneously.

The invention also relates to the use of the adhesive composition according to the invention to manufacture a stone fiber material comprising a stone fiber glued with said adhesive composition.

The material, the adhesive composition and the stone fiber material are as described above.

Contrary to the term "comprising", it is understood that the terms "consisting of" exclude the presence of any other additional compound.

The invention will be better understood in the light of the following examples, given by way of illustration, with reference to:

- **Figure 1** that is a diagram illustrating the viscosity of dispersions prepared from water and micronized plant seed resources (ground pea seed, referred to as "PF" [pea flour]; sunflower meal, "SM"; heat treated sunflower meal, "HT-SM"; soy flour, "SF1" and rapeseed meal, "RM"), depending on the dry content of the dispersions;
- **Figure 2** that shows picture of pea seeds (**A**) and sunflower seeds (**B**) after grinding;
- **Figure 3** that is a picture of a wool fiber material manufactured using Adhesive 12 according to the invention (**A**) and Adhesive 14 as a comparative example (**B**).

## Example 1: Materials and methods

### Materials

Whole yellow pea seeds (*Pisum sativum*), hexane-extracted sunflower meal, hexane-extracted rapeseed meal and hexane-extracted soybean meal (also named soy flour) were purchased from Sanders (France) and ground in order to respectively obtain

- micronized pea flour (PF) with a diameter of Dv10 of 7 $\mu$m, Dv50 of 25 $\mu$m, and Dv90 of 77 $\mu$m;
- micronized sunflower meal (SM) with a diameter of Dv10 of 5 $\mu$m, Dv50 of 30 $\mu$m, and Dv90 of 427 $\mu$m;
- micronized rapeseed meal (RM) with a diameter of Dv10 of 5 $\mu$m, Dv50 of 31 $\mu$m, and Dv90 of 121 $\mu$m and
- micronized soy flour (SF2) with a diameter of Dv10 of 15 $\mu$m, Dv50 of 43 $\mu$m, and Dv90 of 115 $\mu$m.

A laboratory grinder from Retsch model ZM 200 was used for grinding. This equipment allows to get well-defined granulometry profile characterized by the Dv50 value (size in microns that splits the distribution with half above and half below this diameter, in volume; in other words, Dv50 is the median particle size by volume).

A ring sieve with 80 $\mu$m openings and mill speed of 18000 rpm were the conditions used to obtain the target particle size distribution d50 of about 30 $\mu$m.

The heat-treated sunflower meal (HT-SM) was prepared from SM which was heat treated at 150°C during 30 min in dry conditions.

Another grade of soy flour (from hexane extracted soy beans) was also investigated. The soy flour SF1 already micronized was the commercially available soy flour grade 7B purchased from ADM and used as received. The particle size was evaluated and found to have a diameter of Dv10 of 5 $\mu$m, Dv50 of 25 $\mu$m, and Dv90 of 127 $\mu$m.

The micronized pea, sunflower, rapeseed and soy flours have a starch content of 51.7% wt/wt, 3.9% wt/wt, 6.3% wt/wt and 5.7% wt/wt, respectively. Starch content was measured after amylolysis and by HPAEC analyses. Glucose released from starch (after amylolysis) was quantified in HPAEC-PAD (ICS-3000, Thermo Scientific Dionex) using a CarboPac PA1 column (2 mm $\times$ 250 mm, Thermo Scientific, USA), thermostated at 25°C. An isocratic elution of 500 mM of NaOH was used at a flow rate 0.25 mL.min$^{-1}$. Rhamnose was used as an internal standard for calibration

Total crude proteins content of PF, SM, RM, SF1 and SF2 obtained using Kjeldahl procedure (NF EN ISO 5983-2 : 2009) with a nitrogen-to-protein conversion factor of 6.25 was 19.0% $\pm$ 1.6% wt/wt, 37.0% $\pm$ 2.3% wt/wt, 34.0% wt/wt $\pm$ 1.9% wt/wt, 51.2% $\pm$ 2.0% wt/wt and 48.0% $\pm$ 1.4% wt/wt, respectively.

The total oil content of PF, SM, RM, SF1 and SF2 was respectively 1.2% wt/wt; 1.2% wt/wt; 1.4% wt/w; 0.74% wt/wt and 2.0% wt/wt. The oil contents were measured as follows: oil was extracted with a Soxhlet extractor using

n-hexane as solvent. Thereafter, the hexane was separated from oil by using a rotary evaporator at 68°C.

The moisture content of PF, SM, RM, SF1 and SF2 was respectively 7.7% wt/wt, 6.0% wt/wt, 5.0% wt/wt, 4.5% wt/wt and 6.3% wt/wt. The moisture contents were determined by placing about 1.5 g of material in an aluminum cup, the exact weight being measured with an analytical balance with 4 digits after the decimal point. Then the cup is placed in a fan ventilated oven at 105°C for 3h. Fan & valve aperture are set at 100% to accelerate water evaporation. The cup is weighted immediately after being removed from the oven or after conditioning in a desiccator to get sample at room temperature. Moisture content is obtained by calculating the percentage of material loss of the cup before being placed in the oven and after being placed in the oven.

Crude vegetable glycerin with a glycerol content of about 85% wt/wt was provided by Oleon (France) and used as a diluent.

The polyamidoamine-epichlorohydrin (PAE) resin Marenyl WPD 20 was from Mare SpA (Milan, Italia) and used as received. The PAE resin is an aqueous solution with a polymer solids content of 20% wt/wt.

Stone fibers were from Rockwool and used as received.

## Product characterization

### Particle size determination

The particle size of ground samples is measured using a Malvern laser granulometer Mastersizer 3000. Sample material is injected through the dry injection tool of the analyzer. Refractive index and model used are respectively 1.52 and Mie to determine the particle size density profile.

### Rheological analysis

The rheological properties of adhesive formulations were determined by using a Hakke Rheometer (MARSIII, Thermo, Germany). The prepared adhesive samples were placed between parallel plates, and then the shear stress and apparent viscosity under shear rate of 10 s$^{-1}$ were tested at 20°C.

Rheological analysis was performed on dispersions prepared from PF, SM, RM, HT-SM, SF1 (see Example 2). Typically, different amounts of micronized plant based raw materials (from 10% wt/wt to 45% wt/wt of solid) were dispersed into water at ambient temperature. After 10 min of homogenization, the viscosity was recorded.

To highlight the rheological properties depending on the plant-based source, rheological analysis was also performed on different adhesives compositions (see Example 3).

### Stone fiber material characterization

A quantitative method for evaluating the water resistance of the material can be done by determining the amount of water retained by the sample after it is exposed to water. This is typically accomplished by immerging sample into the bath for a period of about 300 seconds. The weight of the wetted sample is then determined and compared with the weight of the sample at the start of the test. Typically specimens of dimension of 200 mm × 200 mm were prepared and weighed. The samples were then floated in a water bath for about 300 seconds. The samples were then removed from the water bath and allowed to drain for about 30 seconds. Each sample was then weighed and percent retained water was calculated.

The result is reported as a percent of the initial weight, which is calculated as:

$$RW = 100 \, \mathrm{x} \frac{WW - DW}{DW}$$

where RW is retained weight, WW is wet weight of the specimen and DW is the dry or initial weight of the specimen.

The mechanical properties were measured using the Intron 34TM-10 Universal machine (Instron Corps.). Compressive Strength is determined according to the Standard BS EN 826:2013. The specimen with nominal dimensions of 200 mm × 200 mm × 24 mm were centrally placed between two plates of the compressive test machine. The compressive test was determined at 10% deformation, because the specimens do not disintegrate during compression but are compacted. Compressive tests was automatically calculated according to the formula:

$$\sigma_{10} = 10^3 \frac{F10}{A0}$$

Where $F_{10}$ is the force corresponding to a strain of 10% in N, $A_0$ is the initial cross-sectional area of the specimen in $mm^2$ and $\sigma_{10}$ is the compressive stress at 10% strain in kPa. The compressive test was conducted at crosshead movement rate of 2.5 mm/min

Humidity

The humidity of the glued stone fibers was measured by using a moisture analyzer (Imal UM2000-LTE). The humidity is calculated in "ATRO" mode (i.e. moisture content in weight parts over 100 weight parts of dry blend).

**Example 2: Viscosity of micronized plant seed resource based dispersions depending on their solid content**

An adhesive composition is aimed to have a high solid content to avoid issues during pressing time at high temperature and high pressure (to prevent the blowout due to an excess of water); but limitation of water to prepare the adhesive composition can lead to a too viscous adhesive resulting in an issue during the process of injection into the stone fibers. Consequently, choosing an appropriate raw material is very important to overcome both issues.

Dispersions were prepared by mixing micronized plant seed resources (pea flour, PF; sunflower meal, SM; heat treated sunflower meal, HT-SM; soy flour, SF1 and rapeseed meal, RM) into water.

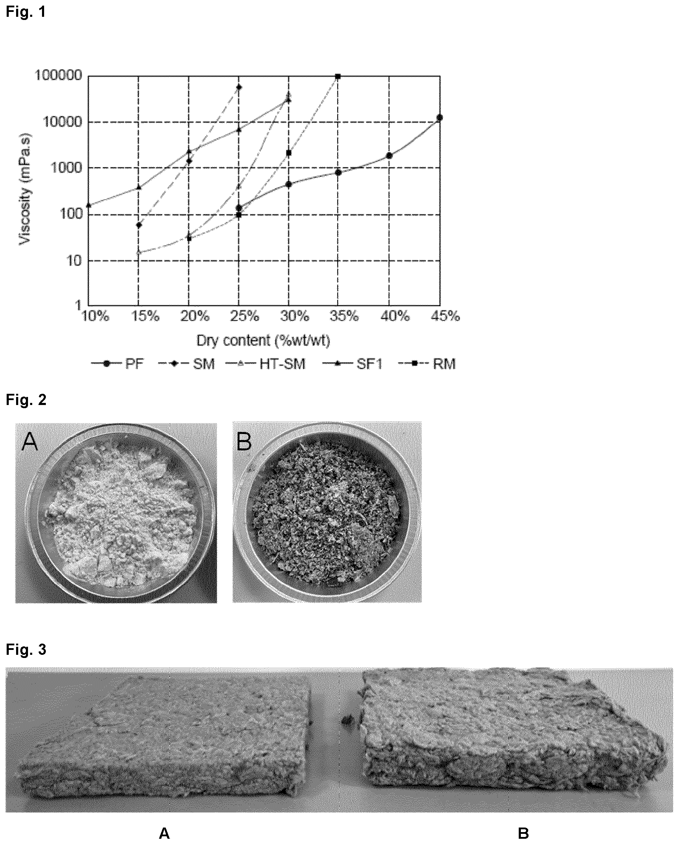

The viscosity of the dispersions was evaluated according to the solid content of the raw materials into water and the results were compared (Figure 1).

Dispersions prepared from raw materials such as soy flour SF1 and sunflower meal SM exhibited the highest viscosity. Their viscosity increased dramatically when the solid content was higher than 20% wt/wt of solid matter into water reaching to very thick dispersions (above 10000 mPa.s).

The viscosity of the heat treated sunflower meal (HT-SM) and of the rapeseed meal (RM) dispersions were better than that of SF1 and SM but increased dramatically for solid contents above 25%.

However, when PF was used, the viscosity was low (inferior to or around 1000 mPa.s) even at solid content equal to 35% wt/wt.

**Example 3: Viscosity of different adhesive solutions based on SF2 or PF**

**Adhesive preparation steps**

**Formulations of a 1st set of adhesive compositions (based on SF2)**

11.25 g of PAE solution were first blend with 23 g of water. 15.75 g of SF2 were then added and then the whole solution was mixed until obtaining a homogeneous mixture. No NaOH was added and the pH was recorded as 3.5 (Adhesive 1 and Adhesive 3) or the solutions were adjusted at 7 with a 10M NaOH solution (Adhesive 2 and Adhesive 4). For the Adhesive 3 and Adhesive 4, 5% wt/wt of NaCl and 5% wt/wt of $NaHSO_3$ were dissolve into the PAE and water solution, before SF2 addition, based on the teaching of International application WO2010028062A1. The total solid amount of the four adhesive formulations was calculated to be 36 % wt/wt.

**Formulations of a 2nd set of adhesive compositions (based on PF)**

11.25 g of PAE solution were first blend with 23 g of water. 15.75 g of PF were then added and then the whole solution was mixed until obtaining a homogeneous mixture. No NaOH was added and the pH was recorded as 3.5 (Adhesive 5 and Adhesive 7) or the solutions were adjusted at 7 with a 10M NaOH solution (Adhesive 6 and Adhesive 8). For Adhesive 7 and Adhesive 8; 5% wt/wt of NaCl and 5% wt/wt of $NaHSO_3$ were dissolved into the PAE and water solution, before PF addition, based on the teaching of International application WO2010028062A1. The total solid amount of the four adhesive formulations was calculated to be 36% wt/wt.

**Formulations of a 3rd set of adhesive compositions**

54 g of PAE were first blend with 22g of glycerin until a homogeneous solution is obtained. 23.5 g of a protein-based raw material were then added to the blend and then whole solution was mixed until obtaining a homogeneous mixture. Adhesive 9 and Adhesive 10 were prepared with SF2 and Adhesive 11 and Adhesive 12 were prepared with PF. For Adhesive 9 and Adhesive 11, no NaOH solution was added and the pH was recorded as 3.5. For Adhesive 10 and Adhesive 12, the solutions were adjusted at 8 with a 10M NaOH solution. The total solid amount of the four adhesive solutions was calculated to be 56.4% wt/wt.

The compositions of the adhesive solutions from Adhesive 1 to Adhesive 12 are summarized in the Table 1 below.

Table 1 : Protein-based raw material composition and pH of biobased adhesives based on PAE

| Adhesives | Protein-based raw material | pH | Viscosity-modifying additive (NaCl and NaHSO$_3$) | Glycerol | Solid content (% wt/wt) |
|---|---|---|---|---|---|
| Adhesive 1 | SF2 | 3.5 | No | No | 36.0 |
| Adhesive 2 | SF2 | 7.0 | No | No | 36.0 |
| Adhesive 3 | SF2 | 3.5 | Yes | No | 36.0 |
| Adhesive 4 | SF2 | 7.0 | Yes | No | 36.0 |
| Adhesive 5 | PF | 3.5 | No | No | 36.0 |
| Adhesive 6 | PF | 7.0 | No | No | 36.0 |
| Adhesive 7 | PF | 3.5 | Yes | No | 36.0 |
| Adhesive 8 | PF | 7.0 | Yes | No | 36.0 |
| Adhesive 9 | SF2 | 3.5 | No | Yes | 56.4 |
| Adhesive 10 | SF2 | 8.0 | No | Yes | 56.4 |
| Adhesive 11 | PF | 3.5 | No | Yes | 56.4 |
| Adhesive 12 | PF | 8.0 | No | Yes | 56.4 |

**Comparison of the viscosity of the adhesive solutions based of SF1 and PF**

Table 2 : Rheological properties of adhesives based on PAE

| Adhesives | Viscosity (mPa.s) |
|---|---|
| Adhesive 1 | 8234 |
| Adhesive 2 | 9207 |
| Adhesive 3 | 2313 |
| Adhesive 4 | 3604 |
| Adhesive 5 | 358 |
| Adhesive 6 | 377 |
| Adhesive 7 | 340 |
| Adhesive 8 | 702 |
| Adhesive 9 | 3600 |
| Adhesive 10 | 4850 |
| Adhesive 11 | 455 |
| Adhesive 12 | 870 |

SF-based adhesives formulation from Adhesive 1 and Adhesive 2 with solid content of 36% wt/wt exhibited very high viscosity (9234 mPa.s at pH 3.5 and 9207 mPa.s at pH 7). One of the solutions to lower the viscosity consists in using viscosity-modifying additives NaHSO$_3$ blend with NaCl. Indeed, as shown in Table 2, these additives were able to reduce the viscosity of the SF2-based adhesive formulations (Adhesive 3 and Adhesive 4). However, the viscosity of these formulations were still very high (2313 mPa.s at pH 3.5 and 3604 mPa.s at pH 7) and were not compatible for an industrial used since the limiting viscosity to be injected throughout nozzles was founded to be 1000 mPa.s. Increasing water amount to prepare SF adhesive formulation however could lead to an excess of water after gluing.

In contrast, adhesive solutions based on PF (Adhesive 5 and Adhesive 6) did not require addition of viscosity-modifying additives since the viscosity were very low. At same solid content of 36% wt/wt, the viscosity of the formulations based on PF was respectively 358 mPa.s at pH 3.5 and 377 mPa.s at pH 7.

Another way to decrease the viscosity of an adhesive formulation consisted in using glycerol as diluent. However, the adhesive formulation based on SF2 and glycerol still had a too high viscosity of 4850 mPa.s (Adhesive 10) while that of PF-based adhesive formulation was 870 mPa.s (Adhesive 12). Consequently, only the PF is a valuable raw material to prepare processable formulation compatible with an industrial use.

## Example 4: Comparison of physicochemical properties of pea flour with others native seeds

Yellow peas used in these examples are whole seeds that have not undergone pretreatment or other process of preparation (such as seed crushing) contrary to others vegetable raw materials usually selected to prepare biobased adhesive compositions. To confirm the interest of pea flour *versus* others oilseeds, additional analysis was conducted on sunflower seeds. Their physicochemical properties were characterized and compared to pea flour.

To evaluate the properties of ground sunflower seeds, the first step consisted in micronization to obtain a particle size Dv10 of 206 $\mu$m, Dv50 of 387 $\mu$m and Dv90 of 654 $\mu$m. However, the grinding of sunflower seeds was not possible due to an excess of oil amount (41.6% wt/wt) which clogged the grinder. Only agglomerates were obtained with sunflower seeds (Figure 2B) instead of a homogeneous powder such as the powder obtained after grinding pea seeds (Figure 2A). Due to this limitation, sunflower seeds cannot be used to produce a liquid adhesive formulation for bonding stone fibers.

## Example 5: Preparation (manufacturing) of a stone fiber material (insulation board) using the composition of the invention *versus* comparative adhesive composition

### Composition of Adhesive 13

57 g of PAE were first blend with 23 g of a PF and then whole solution was mixed until obtaining a homogeneous mixture. The pH of the solution was adjusted at 7 using a NaOH solution. The total solid amount of the adhesive solution was calculated to be 43% wt/wt.

### Composition of Adhesive 14 (comparative example)

50 g of PAE were first blend with 200 g of water until a homogeneous solution. 50 g of a SF2 raw material were then added to the blend and then whole solution was mixed until obtaining a homogeneous mixture, based on the teaching of International application WO2010088321. The total solid amount of the adhesive solution was calculated to be 20% wt/wt.

10% wt/wt of Adhesive 12 (as described in Example 3), Adhesive 13 or Adhesive 14 were first injected using a spray nozzle onto stone fibers. The mixing step was carried out for 5 min. The glued stone fibers were weighted to achieve a density of approximately of 150 kg/m$^3$ and put into a forming box size of 200 mm $\times$ 200 mm $\times$ 120 mm to make mats of glued fibers. The mats were cold pressed by hand and then the mats were placed into a heating press from CARVER (platen of 250 mm $\times$ 250 mm) and pressed at 180°C during 5 min at a maintained thickness of 24 mm. Finally the stone fiber material (stone fiber insulation boards) were placed in a conditioning room at 20°C and 65% r.h. for at least three days before further experiments.

### Results

Stone fiber material (stone fiber insulation boards) were prepared with biobased Adhesives 12 and Adhesive 13 using PF as plant-based raw material or Adhesive 14 using SF2 as plant-based raw material. The Adhesive 14 based on SF2 (comparative example) had a very low solid content of 20% allowing its injection through nozzles. All of these biobased Adhesive formulations had a viscosity below 1500 mPa.s.

Results are shown in Table 3 below.

Table 3: Mechanical properties of stone fibers glued with adhesive 12, adhesive 13 or adhesive 14.

| Formulations | Compressive stress at 10% strain [kPa] | RW (%) | Humidity of glued stone fibers (%) |
|---|---|---|---|
| Adhesive 12 | 2302.7 | 83% | 6.0 |
| Adhesive 13 | 2630.9 | 302% | 5.9 |
| Adhesive 14 | 939.4 | 402% | 12.2 |

It appears from Table 3 that the humidity of stone fibers glued using Adhesive 14 was very high (12.2%), while that glued using Adhesives 12 and 13 was very low (6.0% of humidity).

The mechanical properties of the stone fiber materials were evaluated. The compressive stress at 10% strain were respectively 2302.7, 2630.9 and 939.4 kPa and the retained weight of water were 83, 302 and 402% for Adhesive 12, Adhesive 13 and Adhesive 14, respectively.

Figure 3 shows that the stone fiber materials produced using the pea flour-based adhesive according to the invention (Adhesive 12) had better hold and better stiffness, compared to the stone fiber materials produced using the soy flour-based adhesive (Adhesive 14).

Based on these results, it was shown that the Adhesive 12 and Adhesive 13 are both good adhesives (glues) to produce stone fibers material (stone wool) as they showed very high compression stress and low retained weight of water.

**Conclusion**

Based on these results, it can be concluded that pea flour (*i.e.,* ground pea seed) was the most interesting raw material as it exhibited good adhesive properties, low viscosity allowing its processability and many other advantages comparing to soy flour or others plant meals in particular it does not require processing before being used such as crushing to extract the vegetable oil.

**Claims**

1. Use of an adhesive composition comprising:

   - ground pea seeds comprising between 5 wt% and 40 wt% of crude proteins on the total weight of the ground pea seeds,
   - an amine-based azetidinium-functional cross-linker, and
   - water.

   for binding stone fibers.

2. Use according to claim 1, wherein the ground pea seeds belong to the genus *Pisum* and/or *Lathyrus.*

3. Use according to claim 1 or claim 2, wherein the adhesive composition has a viscosity at 20°C of less than 1500 mPa.s.

4. Use according to any one of claims 1 to 3, wherein the amine-based azetidinium-functional cross-linker is polyamidoamine-epichlorohydrin (PAE), polyalkylenepolyamine-epichlorohydrin (PAPAE), amine polymer-epichlorohydrin (APE), or a combination thereof, preferably PAE.

5. Use according to any one of claims 1 to 4, wherein the adhesive composition comprises between 5 wt% and 60 wt% of the ground pea seeds, based on the total weight of the adhesive composition.

6. Use according to any one of claims 1 to 5, wherein the adhesive composition comprises between 2 wt% and 12 wt% of the amine-based azetidinium-functional cross-linker, based on the total weight of the adhesive composition.

7. Use according to any one of claims 1 to 6, wherein the adhesive composition has a solid content of at least 25 wt%, based on the total weight of the adhesive composition.

8. Use according to any one of claims 1 to 7, wherein the adhesive composition comprises a polyol.

9. Use according to any one of claims 1 to 8, wherein the adhesive composition comprises at least one additive.

10. Use according to any one of claims 1 to 9 for manufacturing a stone fiber material.

11. A stone fiber material comprising the adhesive composition as defined in any one of claims 1 to 9 and stone fibers.

12. A stone fiber material according to claim 11, wherein it is a mat or fabric.

13. A stone fiber material according to claim 11, wherein it is a stone wool product.

14. Process for manufacturing a stone fiber material as defined in any one of claims 11 to 13, comprising a step of contacting the adhesive composition defined in any one of claims 1 to 9 with a stone fibers to provide stone fiber glued with the adhesive composition.

15. Process according to claim 14, comprising the steps of:

> - obtaining stone fibers,
> - contacting the stone fibers with the adhesive composition defined in any one of claims 1 to 9 to provide stone fibers glued with the adhesive composition, and
> - pressing and/or curing the stone fibers glued with the adhesive composition, thereby forming the stone fiber material.

**Fig. 1**

**Fig. 2**

**Fig. 3**

A                                                                    B

Europäisches
Patentamt

European
Patent Office

Office européen
des brevets

## EUROPEAN SEARCH REPORT

Application Number

EP 23 30 5818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 622 030 B1 (ROCKWOOL INT [DK]) 3 March 2021 (2021-03-03) | 1-15 | INV. C09J189/00 D04H1/4209 D04H1/587 |
| Y | * page 1, paragraphs 11, 12, 23, 75; claims 1, 3 * ----- | 1-15 | |
| Y | US 2023/135128 A1 (LE FUR XAVIER [FR] ET AL) 4 May 2023 (2023-05-04) * paragraph [0158]; table 6 * ----- | 1-15 | |

TECHNICAL FIELDS SEARCHED (IPC)

C08G
C09J
C03C
D04H

The present search report has been drawn up for all claims

| Place of search | Date of completion of the search | Examiner |
|---|---|---|
| Munich | 30 October 2023 | Arz, Marius |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5818

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2023

| Patent document cited in search report | | Publication date | Patent family member(s) | | Publication date |
|---|---|---|---|---|---|
| EP 3622030 | B1 | 03-03-2021 | CA | 3061973 A1 | 15-11-2018 |
| | | | CA | 3062512 A1 | 15-11-2018 |
| | | | CA | 3062717 A1 | 15-11-2018 |
| | | | CA | 3062718 A1 | 15-11-2018 |
| | | | CA | 3062735 A1 | 15-11-2018 |
| | | | CA | 3062961 A1 | 15-11-2018 |
| | | | CN | 110799468 A | 14-02-2020 |
| | | | EP | 3621430 A1 | 18-03-2020 |
| | | | EP | 3621931 A1 | 18-03-2020 |
| | | | EP | 3621932 A1 | 18-03-2020 |
| | | | EP | 3621933 A1 | 18-03-2020 |
| | | | EP | 3621934 A1 | 18-03-2020 |
| | | | EP | 3622030 A1 | 18-03-2020 |
| | | | EP | 3848425 A1 | 14-07-2021 |
| | | | ES | 2869345 T3 | 25-10-2021 |
| | | | ES | 2881950 T3 | 30-11-2021 |
| | | | HR | P20211118 T1 | 15-10-2021 |
| | | | PL | 3621931 T3 | 08-11-2021 |
| | | | PL | 3621933 T3 | 20-03-2023 |
| | | | PL | 3621934 T3 | 24-04-2023 |
| | | | PL | 3622030 T3 | 19-07-2021 |
| | | | SI | 3621931 T1 | 31-08-2021 |
| | | | SI | 3622030 T1 | 30-06-2021 |
| | | | US | 2020071864 A1 | 05-03-2020 |
| | | | US | 2020071866 A1 | 05-03-2020 |
| | | | US | 2020131679 A1 | 30-04-2020 |
| | | | US | 2020154653 A1 | 21-05-2020 |
| | | | WO | 2018206128 A1 | 15-11-2018 |
| | | | WO | 2018206129 A1 | 15-11-2018 |
| | | | WO | 2018206130 A1 | 15-11-2018 |
| | | | WO | 2018206131 A1 | 15-11-2018 |
| | | | WO | 2018206132 A1 | 15-11-2018 |
| | | | WO | 2018206133 A1 | 15-11-2018 |
| US 2023135128 | A1 | 04-05-2023 | BR | 112022006941 A2 | 28-06-2022 |
| | | | CA | 3152434 A1 | 15-04-2021 |
| | | | CN | 114729197 A | 08-07-2022 |
| | | | EP | 3805318 A1 | 14-04-2021 |
| | | | EP | 4041825 A1 | 17-08-2022 |
| | | | JP | 2022551326 A | 08-12-2022 |
| | | | KR | 20220083729 A | 20-06-2022 |
| | | | US | 2023135128 A1 | 04-05-2023 |
| | | | WO | 2021069689 A1 | 15-04-2021 |

EPO FORM P0459

For more details about this annex : see Official Journal of the European Patent Office, No. 12/82

**REFERENCES CITED IN THE DESCRIPTION**

**Patent documents cited in the description**

- WO 2022175310 A
- WO 2022174890 A
- WO 2007014236 A
- WO 2010088321 A

- WO 2008024444 A
- WO 2012112734 A
- WO 2010028062 A1